# EUROPEAN PATENT SPECIFICATION

(11) **EP 2 620 695 B1**
(45) Date of publication and mention of the grant of the patent: **04.09.2019**
(21) Application number: 13152359.9
(22) Date of filing: 23.01.2013
(51) Int. Cl.: F21V 5/00, G02B 27/00, G02B 27/42, G02B 19/00, F21S 41/255, F21S 41/275, F21S 41/143, F21W 102/145

(54) **Vehicular headlamp**
Fahrzeugscheinwerfer
Phare de véhicule

(30) Priority: 25.01.2012 JP 2012012925
(43) Date of publication of application: 31.07.2013
(73) Proprietor: KOITO MANUFACTURING CO., LTD., Minato-ku Tokyo 108-8711 (JP)
(72) Inventor: Tanaka, Hidetada, Shizuoka-shi, Shizuoka 424-8764 (JP)
(74) Representative: Grünecker Patent- und Rechtsanwälte PartG mbB

(56) References cited:
- WO-A1-2009/028686
- DE-A1-102008 023 551
- DE-A1-102010 001 431
- JP-A- H03 122 902
- JP-A- 2008 234 858
- JP-A- 2011 090 903
- JP-U- H0 662 402
- US-A1- 2008 117 646
- US-A1- 2008 170 409
- US-A1- 2008 253 141
- US-A1- 2011 011 133

## Description

### 1. Field of the Invention

The invention relates to a vehicular headlamp, and more particularly to a technology for forming a preferable light distribution pattern while suppressing occurrence of chromatic aberration, etc.

### 2. Description of Related Art

In some vehicular headlamps, a semiconductor light-emitting element is arranged as a light source inside a lamp outer housing that is formed of a cover and a lamp body (e.g., see FIG. 3 of Japanese Patent Application Publication No. 2007-213877 (JP-2007-213877 A)).

In the vehicular headlamp described in Japanese Patent Application Publication No. 2007-213877 (JP-2007-213877 A), light beams emitted from the semiconductor light-emitting element are caused to enter a projection lens. The light beams that have entered the projection lens are radiated to the outside as parallel light beams by the projection lens.

However, the wavelength components of the light beams radiated to the outside via the projection lens are different from one another in refractive index in the projection lens. Therefore, for example, blue components with large refractive indices travel toward the center side of the projection lens. As a result, chromatic aberration occurs, and blue color emerges at the outer peripheral portion of a light distribution pattern.

In particular, when an array of a plurality of semiconductor light-emitting elements arranged in alignment in the lateral direction is used as a light source, chromatic aberration is likely to occur because the light-emitting point is not on a focal plane of the projection lens, if the array is arranged behind the focal plane of the projection lens to blur a boundary region in order to reduce the possibility of the occurrence of light streaks in the light distribution nattem. Further prior art is known from documents US 2008/170409 A1 and JP H 03122902 A.

### SUMMARY OF THE INVENTION

It is an object of the invention to provide a vehicular headlamp capable of forming a preferable light distribution pattern while suppressing the occurrence of chromatic aberration, etc.

The object is solved by the subject matter of claim 1.

Accordingly, in the vehicular headlamp, light beams that are not parallel to the optical axis are radiated from the second control portion, and light beams diffused by the diffusion portion reach the outer peripheral portion of a light distribution pattern.

Accordingly, blue components of the light beams emitted from the semiconductor light-emitting element are unlikely to reach the outer peripheral portion of the light distribution pattern, and chromatic aberration is unlikely to occur. Also, the light beams radiated from the diffusion portion are diffused, and are likely to be mixed with the blue components. Therefore, the emergence of a blue color in the light distribution pattern is suppressed, and a good light distribution pattern can be formed.

In the vehicular headlamp according to the foregoing aspect of the invention, it is preferable that the second control portion be formed at least at each of both lateral side portions of the first control portion of the projection lens.

According to this configuration, the occurrence of chromatic aberration in the lateral direction can be suppressed, and a good light distribution pattern can be reliably formed.

In the vehicular headlamp according to the foregoing aspect of the invention, it is preferable that the second control portion be formed so that the closer to an outer edge of the projection lens a position is, the greater an angle, with respect to the line segment, of light beams radiated from the second control portion is.

According to this configuration, the occurrence of chromatic aberration that is likely to be caused by light beams radiated from the outer periphery side of the projection lens can be effectively suppressed.

In the vehicular headlamp according to the foregoing aspect of the invention, it is preferable that a curvature of the second control portion be smaller than a curvature of the first control portion.

In the vehicular headlamp according to the foregoing aspect of the invention, it is preferable that at least one of the semiconductor light-emitting elements be disposed on an optical axis passing through a focal point of the projection lens, and a region of the radiation surface, in which an angle, with respect to the optical axis, of the light beam emitted from the at least one of the semiconductor light-emitting elements is within a range equal to or smaller than a predetermined first angle, be formed as the first control portion. It is preferable that the predetermined first angle be 20°.

In the vehicular headlamp according to the foregoing aspect of the invention, it is preferable that a region of the radiation surface, in which an angle, with respect to the optical axis, of the light beam emitted from the at least one of the semiconductor light-emitting elements is within larger than the predetermined first angle and a range equal to or smaller than a predetermined second angle, be formed as the second control portion. It is preferable that the predetermined second angle be 36°.

In the vehicular headlamp according to the foregoing aspect of the invention, it is preferable that the diffusion portion be formed on a region of the second control portion other than an outer peripheral portion of the second control portion. It is preferable that a diffusive shape of the diffusion portion be a corrugated shape or a grained shape. It is preferable that the diffusion portion be formed so that the diffusive shape gradually disappears as a distance to an outer edge of the radiation surface decreases.

In the vehicular headlamp according to the foregoing aspect of the invention, it is preferable that the diffusion portion be formed on a region of the radiation surface, in which an angle, with respect to the optical axis, of the light beam emitted from the at least one of the semiconductor light-emitting elements is within a range equal to or smaller than a predetermined third angle. It is preferable that the predetermined third angle be 25°.

### BRIEF DESCRIPTION OF THE DRAWINGS

Features, advantages, and technical and industrial significance of an exemplary embodiment of the invention will be described below with reference to the accompanying drawings, in which like numerals denote like elements, and wherein:
FIG. 1 is a schematic horizontal sectional view of a vehicular headlamp, showing, together with FIGS. 2 to 8, one embodiment of a vehicular headlamp according to the present invention;
FIG. 2 is a schematic front view of the vehicular headlamp;
FIG. 3 is an enlarged sectional view of a light emitter;
FIG. 4 is a schematic diagram for illustrating operation of a first control portion and a second control portion on light beams, showing, together with FIG. 5, a shape of a projection lens and light beams transmitted through the projection lens in horizontal section;
FIG. 5 is a schematic diagram for illustrating operation of a diffusion portion on light beams;
FIG. 6 is a schematic diagram showing a light distribution pattern;
FIG. 7 is an enlarged sectional view of a light emitter according to a first modification example of the embodiment of the invention; and
FIG. 8 is an enlarged sectional view of a light emitter according to a second modification example of the embodiment of the invention.

### DETAILED DESCRIPTION OF EMBODIMENT

One embodiment of a vehicular headlamp according to the invention will be described hereinafter with reference to the accompanying drawings.

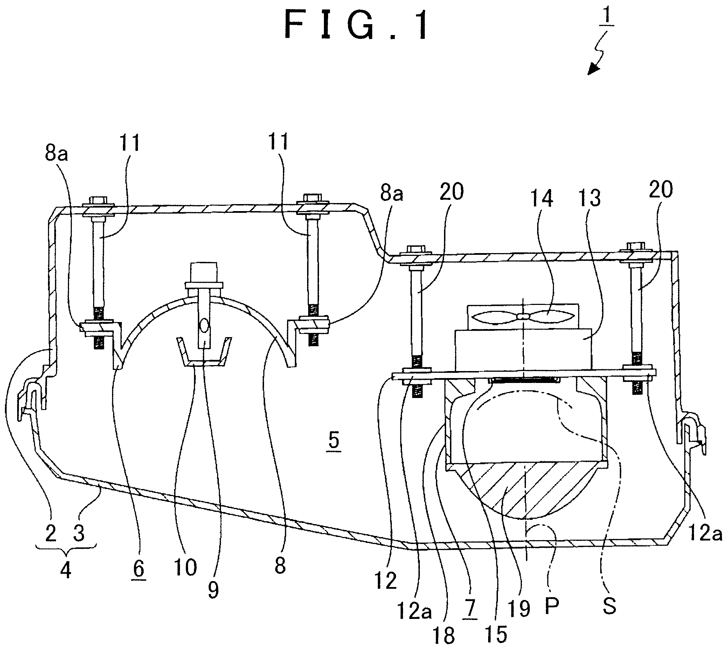

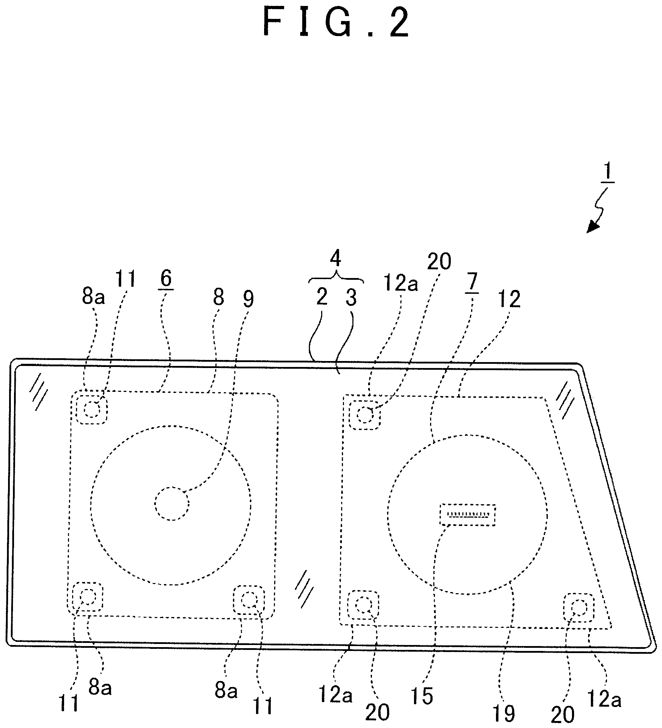

In a vehicular headlamp 1, the interior of a lamp outer housing 4, which is constituted of a lamp body 2 and a cover 3 attached to a front end portion of the lamp body 2, is formed as a lamp chamber 5, and a first lamp unit 6 and a second lamp unit 7 are arranged, laterally spaced apart from each other, in the lamp chamber 5 (see FIGS. 1 and 2).

The first lamp unit 6 has a reflecting mirror 8, a light source 9 attached to the reflecting mirror 8, and a shade 10 that blocks off part of light emitted from the light source 9. The first lamp unit 6 is provided for low beams so as to radiate light beams to a short-distance area. For example, a discharge bulb is used as the light source 9.

The reflecting mirror 8 is provided with three coupling portions 8a, 8a, and 8a that are protruded outward.

The first lamp unit 6 is tiltably supported by the lamp body 2 via aiming shafts 11, 11, and 11 that are screwed and coupled to the coupling portions 8a, 8a, and 8a of the reflecting mirror 8 respectively. When each of the aiming shafts 11 is turned, the first lamp unit 6 is laterally or vertically tilted around the coupling portions 8a and 8a to which this aiming shaft 11 is not screwed, and an optical axis of the first lamp unit 6 is adjusted (an aiming adjustment of the first lamp unit 6 is carried out).

The second lamp unit 7 is constructed by attaching respective required components to a bracket 12 arranged in the lamp chamber 5. The second lamp unit 7 is provided for high beams so as to radiate light beams to a long-distance area.

The bracket 12 is formed of a metal material exhibiting high thermal conductivity, and is provided, at both vertical end portions thereof, with supported portions 12a, 12a, and 12a. A radiator member (radiator fins) 13 is attached to a rear surface of the bracket 12. A radiator fan 14 is attached to a rear surface of the radiator member 13.

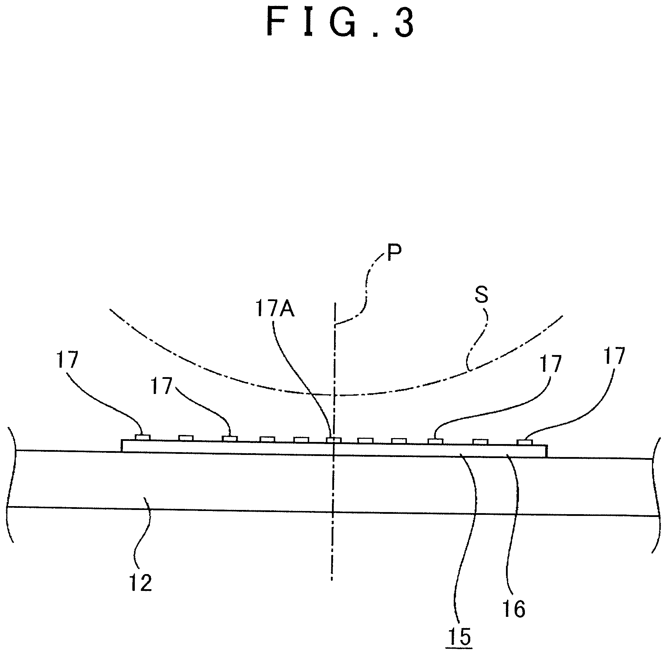

A light emitter 15 is attached to a central portion of a front surface of the bracket 12. As shown in FIG. 3, the light emitter 15 has a base plate 16 attached to the front surface of the bracket 12, and semiconductor light-emitting elements 17, 17, ... and 17 that are mounted, laterally spaced apart from one another, to a front surface of the base plate 16. The semiconductor light-emitting elements 17, 17, ... and 17 function as a light source.

Each of the semiconductor light-emitting elements 17 has a semiconductor layer located behind, and a phosphor layer laminated on a front surface of the semiconductor layer. The one of the semiconductor light-emitting elements 17, 17, ... and 17 that is located at a central portion in the lateral direction is provided as a central semiconductor light-emitting element 17A.

For example, light-emitting diodes (LEDs) are used as the semiconductor light-emitting elements 17, 17, ... and 17.

Driving currents are individually supplied from a lighting circuit (not shown) to the semiconductor light-emitting elements 17, 17, ... and 17. The semiconductor light-emitting elements 17. 17, ... and 17 to which driving currents have been supplied are lit up. The semiconductor light-emitting elements 17, 17, ... and 17 to which driving currents have not been supplied remain off.

Besides, the control of changing the current value of the driving current supplied from the lighting circuit to each of the semiconductor light-emitting elements 17, 17, ... and 17 can be individually performed.

A lens holder 18 is attached to the front surface of the bracket 12 (see FIG. 1). The lens holder 18 is formed generally in the shape of a cylinder through which a hole penetrates in the longitudinal direction, and is attached to the bracket 12 in such a manner as to cover the light emitter 15.

A projection lens 19 is attached to a front end portion of the lens holder 18. The projection lens 19 is formed generally in a hemispheric shape that is convex forward. The projection lens 19 has a focal plane S passing through a focal point F, and projects forward the light emitted from the semiconductor light-emitting elements 17, 17, ... and 17.

The light emitter 15 is located behind the focal plane S, and the central semiconductor light-emitting element 17A is located immediately behind the focal point F.

The second lamp unit 7 is tiltably supported by the lamp body 2 via aiming screws 20, 20, and 20 that are screwed and coupled to the supported portions 12a, 12a, and 12a of the bracket 12 respectively. When each of the aiming screws 20 is turned, the second lamp unit 7 is laterally or vertically tilted around the supported portions 12a and 12a to which the turned aiming screw 20 is not screwed, and an optical axis of the second lamp unit 7 is adjusted (an aiming adjustment of the second lamp unit 7 is carried out).

Incidentally, the vehicular headlamp 1 may be provided with a leveling actuator (not shown), and the leveling actuator may be driven to tilt the first lamp unit 6 and the second lamp unit 7 vertically and thereby carry out a leveling adjustment for adjusting the orientation of the optical axes in accordance with the weight of in-vehicle objects.

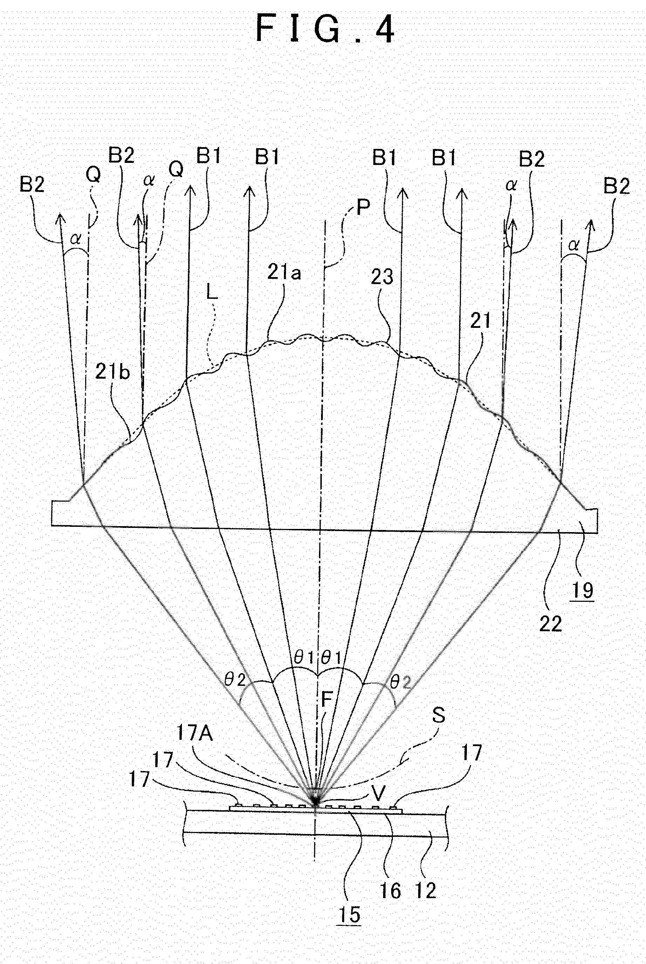

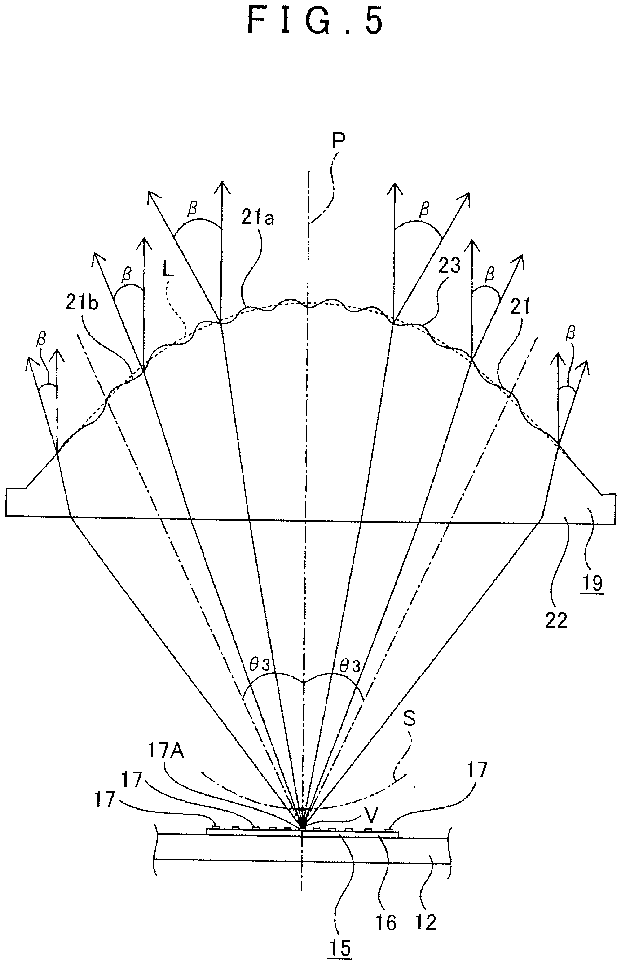

A concrete configuration of the aforementioned projection lens 19 will be described hereinafter (see FIGS. 4 and 5). FIGS. 4 and 5 are views schematically showing the shape of the projection lens 19 and light beams transmitted through the projection lens 19 in horizontal section.

As described above, the projection lens 19 has a radiation surface 21 as a forward convex surface that is formed generally in a hemispheric shape that is convex forward, and a planar incidence surface 22 that faces rearward.

A central region of the radiation surface 21 is formed as a first control portion 21a, and the region of the radiation surface 21 other than the first control portion 21a, except a lower region including part of a region below the center of the radiation surface 21, is formed as a second control portion 21b. The curvature of the second control portion 21b is set smaller than the curvature of the first control portion 21a.

Incidentally, it suffices that at least a central portion of the radiation surface 21 of the projection lens 19 is formed as the first control portion 21a, and at least part of at least an outer peripheral portion of the radiation surface 21 is formed as the second control portion 21b.

A diffusion portion 23 that is formed in a diffusive shape for diffusing light beams is formed on the radiation surface 21. For example, a corrugated shape or a grained shape is used as the diffusive shape of the diffusion portion 23. The diffusion portion 23 is formed in a region other than the outer peripheral portion of the radiation surface 21. That is, the entire first control portion 21a is formed as the diffusion portion 23 as well, and the second control portion 21b is formed, except the outer peripheral portion thereof, as the diffusion portion 23 as well.

Incidentally, it suffices that at least the first control portion 21a of the projection lens 19 is formed as a diffusion portion.

Next, while presenting concrete examples of the range of formation of the first control portion 21a, the second control portion 21b, and the diffusion portion 23 of the projection lens 19, operation of the first control portion 21a and the second control portion 21b on light beams will be described mainly with reference to FIG. 4, and operation of the diffusion portion 23 of the projection lens 19 on light beams will be described mainly with reference to FIG. 5.

Incidentally, arrows shown in FIG. 4 indicate states of control of light beams (optical paths) by the first control portion 21a and the second control portion 21b, and arrows shown in FIG. 5 indicate states of control of light beams (optical paths) by the diffusion portion 23. It should be noted, however, that FIGS. 4 and 5 separately show the states of control for the sake of convenience and for the sake of the understanding of the description. In the projection lens 19, when light beams are radiated from the radiation surface 21, the control by the first control portion 21a, the control by the second control portion 21b, and the control by the diffusion portion 23 are simultaneously performed. Besides, a dotted line L shown in each of FIGS. 4 and 5 is an imaginary line showing a shape when the diffusion portion 23 is not formed on the projection lens 19.

As shown in FIG. 4, in the projection lens 19, the region of the radiation surface 21, in which the angle with respect to an optical axis P (a central axis) of the light beam emitted from a light-emitting point V (the central semiconductor light-emitting element 17A) of the light emitter 15 present on the optical axis P passing through the focal point F is within, for example, a range equal to or smaller than 20° (θ1, θ1), is formed as the first control portion 21a. Light beams B1, B1, ... and B1 that are parallel to the optical axis P are radiated from the first control portion 21a.

Besides, in the projection lens 19, the region of the radiation surface 21, in which the angle with respect to the optical axis P of the light beam emitted from the light-emitting point V of the light emitter 15 is within, for example, a range larger than 20° and equal to or smaller than 36° (θ2, θ2), is formed as the second control portion 21b. Light beams are radiated from the second control portion 21b in directions that are inclined outward by angles α, α, ... and α with respect to line segments Q, Q, ... and Q that are parallel to the optical axis P.

In the second control portion 21b, the angles α, α, ... and α of radiated light beams with respect to the line segments Q are set so that the closer to the outer edge the position is, the greater the angle is, and the maximum value of the angles α is set to, for example. 1.6°.

In the projection lens 19. as shown in FIG. 5. the region of the radiation surface 21 except an outer peripheral portion thereof is formed as the diffusion portion 23. The diffusion portion 23 is formed so that the diffusive shape thereof gradually disappears as the distance to the outer edge of the radiation surface 21 decreases. Accordingly, diffusion angles β, β, ... and β of light beams radiated from the diffusion portion 23 are set in such a manner as to gradually decrease as the distance to the outer edge of the radiation surface 21 decreases.

Incidentally, in the diffusion lens 19, the diffusion portion 23 may be formed in such a diffusive shape that a region thereof, in which the angle with respect to the optical axis P of the light beam emitted from the light-emitting point V of the light emitter 15 is within, for example, a range equal to or smaller than 25° (θ3, θ3), is substantially homogeneous. In this case, the diffusion angles of light beams radiated from the range (θ3, θ3) of the diffusion portion 23 are made substantially homogeneous.

In the projection lens 19, as described above, the region of the radiation surface 21 other than the first control portion 21a, except the lower region, is formed as the second control portion 21b, and the lower region of part of the radiation surface 21 other than the first control portion 21a is formed as an upward radiation portion that is larger in curvature radius than the first control portion 21a.

Light beams are radiated from the upward radiation portion in a direction that is inclined inward (upward) with respect to the line segments Q. By thus forming the upward radiation portion to radiate upward light beams, a high-beam light distribution pattern can be easily formed.

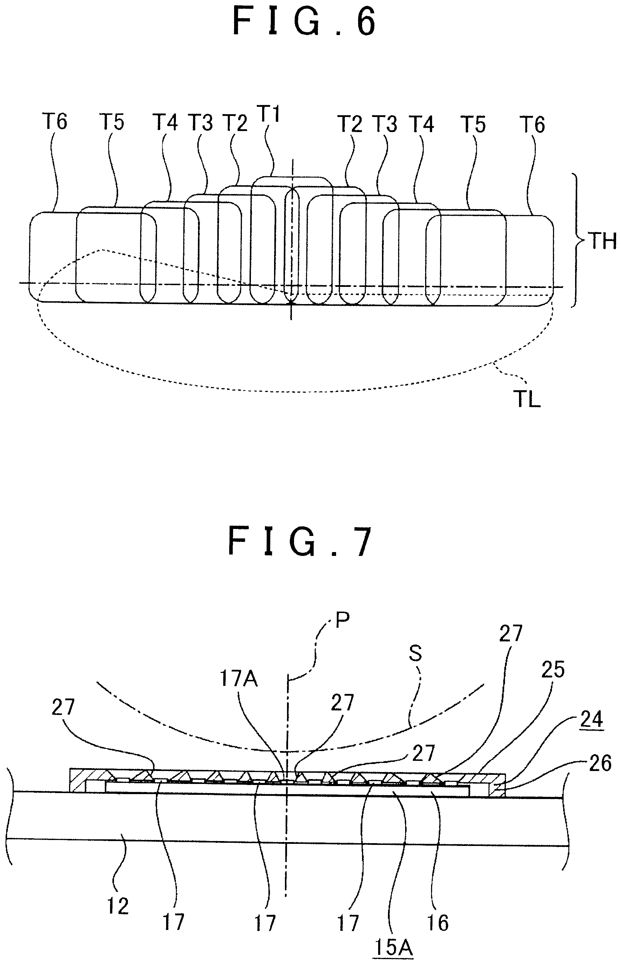

When light beams are emitted from the respective semiconductor light-emitting elements 17, 17, ... and 17 of the light emitter 15 configured as described above, the emitted light beams are caused to enter the projection lens 19 from the incidence surface 22, radiated to the outside from the radiation surface 21 of the projection lens 19, and projected, so that a high-beam light distribution pattern TH is formed (see FIG. 6). Besides, when light beams are emitted from the light source 9 of the first lamp unit 6, a low-beam light distribution pattern TL is formed.

The high-beam light distribution pattern TH is formed by synthesizing distributions T1, T2, ... and T6 of light beams emitted from the respective semiconductor light-emitting elements 17, 17, ... and 17, and the distributions T1, T2, ... and T6 of the light beams overlap in the lateral direction.

In the distributions T1, T2, ... and T6 of the light beams, the lateral width is set so as to be minimized at the central portion in the lateral direction, and to sequentially increase as the distance to the outside in the lateral direction decreases. Besides, in the distributions T1, T2, ... and T6 of the light beams, the vertical width is set so as to be maximized at the central portion in the lateral direction, and to sequentially decrease as the distance to the outside in the lateral direction decreases.

In the projection lens 19, as described above, parallel light beams that are parallel to the optical axis P are radiated from the first control portion 21a, and light beams that are inclined outward with respect to the line segments Q parallel to the optical axis P are radiated from the second control portion 21b. The refractive index of the projection lens 19 differs depending on the frequency components of light beams. Due to chromatic dispersion, for example, blue components are radiated more inward than red components. However, light beams are controlled so as to be radiated outward with respect to the line segments Q in the second control portion 21b, so that the blue components are also inclined inward at a small angle.

Accordingly, in a state where light beams radiated from the projection lens 19 are projected as the light distribution pattern TH, blue components less reach the outer peripheral portion of the light distribution pattern TH, and as a result, chromatic aberration is suppressed.

Besides, light beams (white light beams) radiated from the diffusion portion 23 of the projection lens 19 are diffused, and are mixed with the blue components that reach the outer periphery side of the light distribution pattern TH. Therefore, the emergence of a blue color in the light distribution pattern TH is suppressed.

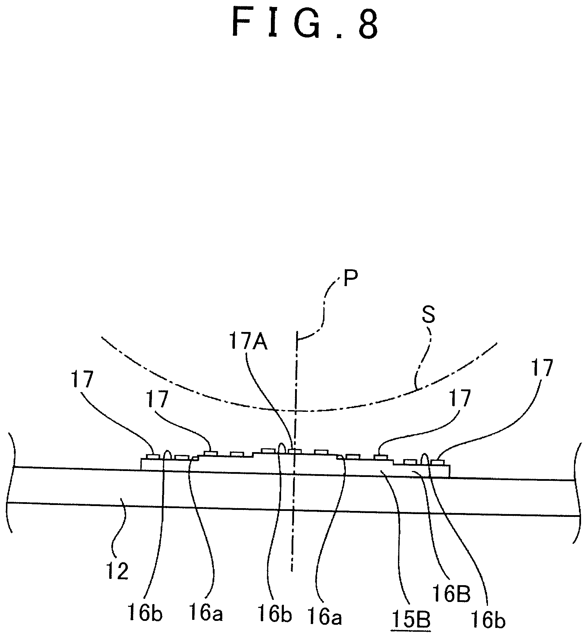

Next, first and second modification examples of the light emitter will be described (see FIGS. 7 and 8).

A light emitter 15A according to the first modification example is different from the aforementioned light emitter 15 only in that a reflecting member is provided. Accordingly, the light emitter 15A will be described in detail only as to the components different from those of the light emitter 15. The other components are denoted by the same reference numerals as those assigned to the similar components of the light emitter 15 respectively, and the description thereof is omitted.

As shown in FIG. 7, the light emitter 15A according to the first modification example has a base plate 16 attached to the front surface of the bracket 12, and semiconductor light-emitting elements 17, 17, ... and 17 that are mounted, laterally spaced apart from one another, on a front surface of the base plate 16.

A reflecting member 24 is attached to the front surface of the bracket 12. The reflecting member 24 includes a reflector formation portion 25 and an attached portion 16. The reflector formation portion 25 is located on front surface sides of the semiconductor light-emitting elements 17, 17, ... and 17, and assumes a longitudinally oriented plate shape. The attached portion 26 is protruded backward from an outer peripheral portion of the reflector formation portion 25. The attached portion 26 is attached to the bracket 12.

A plurality of reflectors 27, 27, ... and 27 that are laterally aligned are formed on the reflector formation portion 25. The reflectors 27, 27, ... and 27 are located corresponding in position to the semiconductor light-emitting elements 17, 17, ... and 17 respectively.

In this manner, the light emitter 15A has the reflectors 27, 27, ... and 27. Therefore, light beams emitted from the semiconductor light-emitting elements 17, 17, ... and 17 are reflected in desired directions, so that the traveling direction of the light beams can be controlled, and that a desired light distribution pattern can be formed.

A light emitter 15B according to the second modification example is different from the aforementioned light emitter 15 only in the shape of the base plate. Accordingly, the light emitter 15B will be described in detail only as to the components different from those of the light emitter 15. The other components are denoted by the same reference numerals as those assigned to the similar components of the light emitter 15 respectively, and the description thereof is omitted.

As shown in FIG. 8, the light emitter 15B according to the second modification example has a base plate 16B that is attached to the front surface of the bracket 12, and the semiconductor light-emitting elements 17, 17, ... and 17 that are mounted, laterally spaced apart from one another, on a front surface of the base plate 16B.

The base plate 16B is formed in a staircase shape with a central portion thereof in the lateral direction located most forward and with both lateral end portions thereof located most rearward. Forward-oriented surfaces of the base plate 16B located among respective steps 16a, 16a, ... and 16a thereof are formed as arrangement surfaces 16b, 16b, ... and 16b respectively.

One or a plurality of the semiconductor light-emitting elements 17, 17, ... and 17 are arranged, laterally spaced apart from one another, on each of the arrangement surfaces 16b, 16b, ... and 16b.

Incidentally, it suffices that the number of steps of the base plate 16B is plural. As shown in FIG. 8, the base plate 16B may have three steps, two steps, or four or more steps.

As described above, in the light emitter 15B, the base plate 16B is formed in a staircase shape with the central portion thereof in the lateral direction located most forward. Therefore, the distance between each of the semiconductor light-emitting elements 17, 17, ... and 17 located on both end sides in the lateral direction and the focal plane S of the projection lens 19 is long.

Accordingly, the lateral width of the distribution of light beams forming both lateral end side regions of the light distribution pattern TH is great, and the amount of overlap of light distributions is great. Therefore, it is possible to suppress the generation of light streaks that could result from a decrease in the illuminance of a boundary region as a region between the distributions of light beams emitted from the respective semiconductor light-emitting elements 17, 17, ... and 17 in the light distribution pattern TH.

As described above, in the vehicular headlamp 1, light beams emitted from the light-emitting point V on the optical axis P passing through the focal point F of the projection lens 19 are radiated from the first control portion 21a as parallel light beams that are parallel to the optical axis P, and are radiated from the second control portion 21b outward with respect to the line segments Q that are parallel to the optical axis P. The diffusion portion 23 is formed on the projection lens 19.

Accordingly, blue components of light beams emitted from the semiconductor light-emitting elements 17, 17, ... and 17 less reach the outer peripheral portion of the light distribution pattern TH, and as a result, chromatic aberration is suppressed. Also, light beams radiated from the diffusion portion 23 are diffused, and are mixed with the blue components. Therefore, the emergence of a blue color in the light distribution pattern TH is suppressed, so that the good light distribution pattern TH can be formed.

Besides, the second control portion 21b is formed at least at each of both the lateral end portions of the projection lens 19. Therefore, the occurrence of chromatic aberration in the lateral direction can be suppressed, so that the good light distribution pattern TH can be reliably formed.

Furthermore, the angles of light beams radiated from the second control portion 21b with respect to the line segments Q are set so as to increase as the distance to the outer periphery of the projection lens 19 decreases. Therefore, in particular, the occurrence of chromatic aberration that is likely to be caused by light beams radiated from the outer periphery side of the projection lens 19 can be effectively suppressed.

Incidentally, although the example in which the array of the plurality of the semiconductor light-emitting elements 17, 17, ... and 17 arranged in alignment is used as a light source has been illustrated above, the plurality of the semiconductor light-emitting elements 17, 17, ... and 17 are not required as a light source, but the single semiconductor light-emitting element 17 may be used as a light source.

Besides, although the example in which the light emitter 15 is located behind the focal plane S has been illustrated above, at least one of the semiconductor light-emitting elements 17 may be located on the focal point F.

## Claims

1. A vehicular headlamp (1) comprising:
a semiconductor light-emitting element (17) that is used as a light source; and
a projection lens (19) that projects light beams emitted from the semiconductor light-emitting element (17), and radiates the light beams to an outside from a radiation surface (21) thereof, whereby a central portion of the radiation surface (21) of the projection lens (19) is formed as a first control portion (21a);
at least part of an outer peripheral portion of the radiation surface (21) of the projection lens (19) is formed as a second control portion (21b); the vehicular headlamp being **characterised in that**:
the second control portion (21b) is formed such that light beams emitted from the light-emitting point on the optical axis (P) passing through the focal point (F) of the projection lens (19) are radiated from the second control portion (21b) outward of a line segment that is parallel to the optical axis (P); and
a diffusion portion (23) that diffuses light beams is formed on at least the first control portion (21a) of the projection lens (19), light beams diffused by the diffusion portion (23) reach an outer peripheral portion of a light distribution pattern of the vehicle headlamp (1).

2. The vehicular headlamp (1) according to claim 1, wherein
the second control portion (21b) is formed at least at each of both lateral side portions of the first control portion (21a) of the projection lens (19).

3. The vehicular headlamp (1) according to claim 1 or 2, wherein
the second control portion (211b) is formed so that the closer to an outer edge of the projection lens (19) a position is, the greater an angle, with respect to the line segment, of light beams radiated from the second control portion (21b) is.

4. The vehicular headlamp (1) according to any one of claims 1 to 3, wherein
a curvature of the second control portion (21b) is smaller than a curvature of the first control portion (21a).

5. The vehicular headlamp (1) according to any one of claims 1 to 4, wherein at least one of the semiconductor light-emitting elements (17) is disposed on the optical axis passing through the focal point of the projection lens (19), and a region of the radiation surface (21), in which an angle, with respect to the optical axis, of the light beam emitted from the at least one of the semiconductor light-emitting elements (17) is within a range equal to or smaller than a predetermined first angle, is formed as the first control portion (21a).

6. The vehicular headlamp (1) according to claim 5, wherein
the predetermined first angle is 20°.

7. The vehicular headlamp (1) according to claim 5 or 6, wherein
a region of the radiation surface (21), in which an angle, with respect to the optical axis, of the light beam emitted from the at least one of the semiconductor light-emitting elements (17) is within a range larger than the predetermined first angle and equal to or smaller than a predetermined second angle, is formed as the second control portion (21b).

8. The vehicular headlamp (1) according to claim 7, wherein
the predetermined second angle is 36°.

9. The vehicular headlamp (1) according to any one of claims 1 to 8. wherein
the diffusion portion (23) is formed on a region of the second control portion (21b) other than an outer peripheral portion of the second control portion (21b).

10. The vehicular headlamp (1) according to any one of claims 1 to 9, wherein
a diffusive shape of the diffusion portion (23) is a corrugated shape or a grained shape.

11. The vehicular headlamp (1) according to claim 10, wherein
the diffusion portion (23) is formed so that the diffusive shape gradually disappears as a distance to an outer edge of the radiation surface (21) decreases.

12. The vehicular headlamp (1) according to any one of claims 5 to 11, wherein
the diffusion portion (23) is formed on a region of the radiation surface (21), in which an angle, with respect to the optical axis, of the light beam emitted from the at least one of the semiconductor light-emitting elements (17) is within a range equal to or smaller than a predetermined third angle.

13. The vehicular headlamp (1) according to claim 12, wherein
the predetermined third angle is 25°.

## Patentansprüche

1. Ein Fahrzeugscheinwerfer (1), aufweisend:
ein Halbleiter- lichtemittierendes Element (17), das als eine Lichtquelle benutzt wird; und
eine Projektionslinse (19), die von dem Halbleiter- lichtemittierenden Element (17) emittierte Lichtstrahlen projiziert, und die Lichtstrahlen zu einer Außenseite von einer Ausstrahlungsoberfläche (21) davon ausstrahlt,
wobei
ein zentraler Abschnitt der Ausstrahlungsoberfläche (21) der Projektionslinse (19) als ein erster Kontrollabschnitt (21a) ausgebildet ist;
zumindest ein Teil eines äußeren Peripherieabschnitts der Ausstrahlungsoberfläche (21) der Projektionslinse (19) als ein zweiter Kontrollabschnitt (21b) ausgebildet ist; wobei der Fahrzeugscheinwerfer **dadurch gekennzeichnet ist, dass**:
der zweite Kontrollabschnitt (21b) so ausgebildet ist, dass Lichtstrahlen, die von dem lichtemittierenden Punkt auf der optischen Achse (P), die durch den Brennpunkt (F) der Projektionslinse (19) verläuft, emittiert werden, von dem zweiten Kontrollabschnitt (21b) nach außen von einem Liniensegment, das parallel zu der optischen Achse (P) ist,
ausgestrahlt werden; und
ein Streuabschnitt (23), der Lichtstrahlen streut, an zumindest dem ersten Kontrollabschnitt (21a) der Projektionslinse (19) ausgebildet ist, Lichtstrahlen, die von dem Streuabschnitt (23) gestreut werden, einen äußeren Peripherieabschnitt eines Lichtverteilungsmusters des Fahrzeugscheinwerfers (1) erreichen.

2. Der Fahrzeugscheinwerfer (1) gemäß Anspruch 1, wobei
der zweite Kontrollabschnitt (21b) zumindest an jedem von beiden lateralen Seitenabschnitten des ersten Kontrollabschnitts (21a) der Projektionslinse (19) ausgebildet ist.

3. Der Fahrzeugscheinwerfer (1) gemäß Anspruch 1 oder 2, wobei
der zweite Kontrollabschnitt (21b) so ausgebildet ist, dass, je enger eine Position zu einem äußeren Rand der Projektionslinse (19) ist, desto größer ein Winkel bezüglich dem Liniensegment von Lichtstrahlen, die von dem zweiten Kontrollabschnitt (21b) ausgestrahlt werden, ist.

4. Der Fahrzeugscheinwerfer (1) gemäß irgendeinem von Ansprüchen 1 bis 3, wobei eine Krümmung des zweiten Kontrollabschnitts (21b) kleiner als eine Krümmung des ersten Kontrollabschnitts (21a) ist.

5. Der Fahrzeugscheinwerfer (1) gemäß irgendeinem von Ansprüchen 1 bis 4, wobei zumindest eines der Halbleiter- lichtemittierenden Elemente (17) auf der optischen Achse angeordnet ist, die durch den Brennpunkt der Projektionslinse (19) verläuft, und eine Region der Ausstrahlungsoberfläche (21), in der ein Winkel bezüglich der optischen Achse von dem Lichtstrahl, der von dem zumindest einen der Halbleiterlichtemittierenden Elemente (17) emittiert wird, innerhalb eines Bereichs gleich einem oder kleiner als ein vorgegebener erster Winkel ist, als der erste Kontrollabschnitt (21a) ausgebildet ist.

6. Der Fahrzeugscheinwerfer (1) gemäß Anspruch 5, wobei
der vorgegebene erste Winkel 20° ist.

7. Der Fahrzeugscheinwerfer (1) gemäß Anspruch 5 oder 6, wobei
eine Region der Ausstrahlungsoberfläche (21), in der ein Winkel bezüglich der optischen Achse von dem Lichtstrahl, der von dem zumindest einen der Halbleiterlichtemittierenden Elemente (17) emittiert wird, innerhalb eines Bereichs größer als der vorgegebene erste Winkel und gleich einem oder kleiner als ein vorgegebener zweiter Winkel ist, als der zweite Kontrollabschnitt (21b) ausgebildet ist.

8. Der Fahrzeugscheinwerfer (1) gemäß Anspruch 7, wobei
der vorgegebene zweite Winkel 36° ist.

9. Der Fahrzeugscheinwerfer (1) gemäß irgendeinem von Ansprüchen 1 bis 8, wobei der Streuabschnitt (23) an einer anderen Region des zweiten Kontrollabschnitts (21b) als einem äußeren Peripherieabschnitt des zweiten Kontrollabschnitts (21b) ausgebildet ist.

10. Der Fahrzeugscheinwerfer (1) gemäß irgendeinem von Ansprüchen 1 bis 9, wobei eine streuende Gestalt des Streuabschnitts (23) eine gewellte Gestalt oder eine gekörnte Gestalt ist.

11. Der Fahrzeugscheinwerfer (1) gemäß Anspruch 10, wobei
der Streuabschnitt (23) so ausgebildet ist, dass die streuende Gestalt graduell verschwindet, wenn eine Distanz zu einem äußeren Rand der Ausstrahlungsoberfläche (21) abnimmt.

12. Der Fahrzeugscheinwerfer (1) gemäß irgendeinem von Ansprüchen 5 bis 11, wobei der Streuabschnitt (23) an einer Region der Ausstrahlungsoberfläche (21) ausgebildet ist, in der ein Winkel bezüglich der optischen Achse von dem Lichtstrahl, der von dem zumindest einen der Halbleiter- lichtemittierenden Elemente (17) emittiert wird, innerhalb eines Bereichs gleich einem oder kleiner als ein vorgegebener dritter Winkel ist.

13. Der Fahrzeugscheinwerfer (1) gemäß Anspruch 12, wobei
der vorgegebene dritte Winkel 25° ist.

## Revendications

1. Phare de véhicule (1) comprenant :
un élément d'émission de lumière semi-conducteur (17) qui est utilisé comme une source de lumière ; et
une lentille de projection (19) qui projette des faisceaux lumineux émis depuis l'élément d'émission de lumière semi-conducteur (17), et irradie les faisceaux lumineux vers un extérieur depuis une surface de rayonnement (21) de celle-ci, moyennant quoi
une partie centrale de la surface de rayonnement (21) de la lentille de projection (19) est formée comme une première partie de commande (21a) ;
au moins une partie d'une partie périphérique extérieure de la surface de rayonnement (21) de la lentille de projection (19) est formée comme une seconde partie de commande (21b) ; le phare de véhicule étant **caractérisé en ce que** :
la seconde partie de commande (21b) est formée de telle manière que des faisceaux lumineux émis depuis le point d'émission de lumière sur l'axe optique (P) passant par le point focal (F) des lentilles de projection (19) rayonnent depuis la seconde partie de commande (21b) vers l'extérieur d'un segment de ligne qui est parallèle à l'axe optique (P) ; et
une partie de diffusion (23) qui diffuse des faisceaux lumineux est formée sur au moins la première partie de commande (21a) de la lentille de projection (19),
des faisceaux lumineux diffusés par la partie de diffusion (23) atteignent une partie périphérique extérieure d'un diagramme de distribution de lumière du phare de véhicule (1).

2. Phare de véhicule (1) selon la revendication 1, dans lequel
la seconde partie de commande (21b) est formée au moins au niveau de chacune des deux parties de côté latérales de la première partie de commande (21a) de la lentille de projection (19).

3. Phare de véhicule (1) selon la revendication 1 ou 2, dans lequel
la seconde partie de commande (21b) est formée de telle manière que plus une position est proche d'un bord extérieur de la lentille de projection (19), plus un angle, par rapport au segment de ligne, des faisceaux lumineux rayonnant depuis la seconde partie de commande (21b) est grand.

4. Phare de véhicule (1) selon l'une quelconque des revendications 1 à 3, dans lequel
une courbure de la seconde partie de commande (21b) est inférieure à une courbure de la première partie de commande (21a).

5. Phare de véhicule (1) selon l'une quelconque des revendications 1 à 4, dans lequel
au moins un des éléments d'émission de lumière semi-conducteurs (17) est disposé sur l'axe optique passant par le point focal de la lentille de projection (19), et
une région de la surface de rayonnement (21), dans laquelle un angle, par rapport à l'axe optique, du faisceau lumineux émis depuis l'au moins un des éléments d'émission de lumière semi-conducteurs (17) est dans une plage inférieure ou égale à un premier angle prédéterminé, est formée comme la première partie de commande (21a).

6. Phare de véhicule (1) selon la revendication 5, dans lequel le premier angle prédéterminé est de 20°.

7. Phare de véhicule (1) selon la revendication 5 ou 6, dans lequel
une région de la surface de rayonnement (21), dans laquelle un angle, par rapport à l'axe optique, du faisceau lumineux émis depuis l'au moins un des éléments d'émission de lumière semi-conducteurs (17) est dans une plage supérieure au premier angle prédéterminé et inférieure ou égale à un second angle prédéterminé, est formée comme la seconde partie de commande (21b).

8. Phare de véhicule (1) selon la revendication 7, dans lequel le second angle prédéterminé est de 36°.

9. Phare de véhicule (1) selon l'une quelconque des revendications 1 à 8, dans lequel
la partie de diffusion (23) est formée sur une région de la seconde partie de commande (21b) autre qu'une partie périphérique extérieure de la seconde partie de commande (21b).

10. Phare de véhicule (1) selon l'une quelconque des revendications 1 à 9, dans lequel une forme diffusive de la partie de diffusion (23) est une forme striée ou une forme granulée.

11. Phare de véhicule (1) selon la revendication 10, dans lequel
la partie de diffusion (23) est formée de telle manière que la forme diffusive disparait progressivement quand une distance à un bord extérieur de la surface de rayonnement (21) diminue.

12. Phare de véhicule (1) selon l'une quelconque des revendications 5 à 11, dans lequel
la partie de diffusion (23) est formée sur une région de la surface de rayonnement (21), dans laquelle un angle, par rapport à l'axe optique, du faisceau lumineux émis depuis l'au moins un des éléments d'émission de lumière semi-conducteurs (17) est dans une plage inférieure ou égale à un troisième angle prédéterminé.

13. Phare de véhicule (1) selon la revendication 12, dans lequel le troisième angle prédéterminé est de 25°.
